# EUROPEAN PATENT APPLICATION

(11) **EP 4 648 406 A1**
(43) Date of publication of application: **12.11.2025**
(21) Application number: 24174274.1
(22) Date of filing: 06.05.2024
(51) Int. Cl.: H04N 19/105, H04N 19/132, H04N 19/172, H04N 19/187, H04N 19/30, H04N 19/59, H04N 19/70

(54) **A METHOD AND AN ENCODING UNIT FOR ENCODING A VIDEO SEQUENCE**

(71) Applicant: Axis AB, 223 69 Lund (SE)
(72) Inventor: Edpalm, Viktor, 223 69 LUND (SE); Toresson, Alexander, 223 69 LUND (SE)
(74) Representative: AWA Sweden AB

(57) **Abstract**

The present disclosure relates to encoding a sequence of frames in a video stream, comprising receiving the sequence of frames at a first frame rate, encoding every second frame in the received sequence in a first base layer employing intercoding and intracoding, inserting skip frames between the frames encoded in the first base layer, such that every second frame in the first base layer is intercoded with a reference to copy image content of a previous encoded frame in the first base layer, encoding remaining frames in the received sequence in a first Low Complexity Enhancement Video Coding, LCEVC, layer associated with the first base layer, employing residuals and references to corresponding skip frames in the first base layer, and embedding the first LCEVC layer in the first base layer to obtain a first sequence of encoded frames at the first frame rate.

## Description

### Technical Field

The present invention relates to the field of video coding. In particular, the present invention relates to a method and an encoding unit for encoding a sequence of frames in a video stream.

### Background

Advances in image sensor technology for monitoring cameras have led to large increases in both image resolution and image frame rates. This in turn leads to an increased demand on encoding resources needed in the camera for encoding the image data into formats appropriate for storage or live streaming.

However, it might not always be practical or even possible to add resources to the image encoding in the camera so that it will match the potential increase in image data delivered from a high resolution and high frame rate image sensor. There may be restrictions on the amount of power that can be used by an image encoder performing the encoding in the camera and there might not be space on the image processing chip available for a larger hardware encoder.

Therefore, it is of obvious interest to find new ways to enable efficient encoding of video when resources are limited.

### Summary

In view of the above, it is an object of the invention to overcome or mitigate the issues mentioned above by providing an encoding method that enables encoding a larger amount of image data while adhering to restrictions in terms of amount of power used and available area on the image processing chip.

The above objective is achieved by the invention as defined by the appended independent claims. Advantageous embodiments are defined by the appended dependent claims.

The inventors have realized that by encoding some image frames of a video sequence in a base layer by an encoder, herein denoted a base encoder, and some image frames in a Low Complexity Enhancement Video Coding, LCEVC, layer using an LCEVC encoder, and additionally adding skip frames at strategic positions, it is possible to improve utilization of both the base encoder and the LCEVC encoder.

An LCEVC encoder is adapted for encoding an enhancement to a frame encoded in a base layer, and the type of encoding used in an LCEVC encoder is relatively straightforward and requires less resources than the encoding done in the base layer. Therefore, an LCEVC encoder is markedly more efficient than a base layer encoder in regard to both power usage and in terms of the area that the encoder occupies on the image processing chip.

The LCEVC standard specification is published as ISO/IEC 23094-2-Information Technology-General Video Coding Part 2: Low Complexity Enhancement Video Coding, Standard ISO/IEC 23094-2:2021, November 2021 and ISO/IEC 23094-3-Information Technology-General Video Coding Part 3: Conformance and Reference Software for Low Complexity Enhancement Video Coding, Standard ISO/IEC 23094-3:2021, 2022

The LCEVC coding strategy is also described, e.g., in S. Battista et al., "Overview of the Low Complexity Enhancement Video Coding (LCEVC) Standard," in IEEE Transactions on Circuits and Systems for Video Technology, vol. 32, no. 11, pp. 7983-7995, Nov. 2022, doi: 10.1109/TCSVT.2022.3182793*.* As is described in this paper, when using LCEVC in a standard way, an input full resolution video is downscaled and then encoded by a base encoder, e.g., an H.264, H.265 or AV1 encoder, as a base layer in lower resolution. An LCEVC encoder is then used to encode differences between the full resolution input video and a upscaled reconstructed version of the base layer in one (L2) or two (L1 and L2) independent enhancement layers.

According to the LCEVC standard, the L2 layer is mandatory, and the L1 layer is optional. It may be noted that if both the L1 and the L2 layers are used, the input video is downscaled or downsampled two consecutive times before the base layer encoding and, consequently, two upscalings or upsamplings of the reconstructed base layer are done, one for the L1 layer and another one for the L2 layer.

The LCEVC enhancement layer(s) will in this way add resolution to the base layer when decoded in an LCEVC compatible decoder. If a non-LCEVC compatible decoder is used (with decoding matching the encoding of the base layer), only the base layer will be decoded, and the LCEVC enhancement layers will just be ignored by such a decoder, making the LCEVC technology backwards compatible.

LCEVC is a multi-layer video coding technology, where the LCEVC L1 and L2 layers are independent of the base layer, which means that practically any base layer encoded video can be enhanced using the same LCEVC technology. As is explained, e.g., in the above referenced paper, the LCEVC enhancement layer(s) encodes residuals, i.e., coding errors between an upscaled base layer encoded video and the full resolution original video and does not use any motion estimation or encodes any motion vectors in relation to the base video. For sake of completeness it may be mentioned that the L2 layer can optionally include temporal prediction within the L2 layer, using a temporal buffer which stores residuals encoded from a previous frame.

It should be noted that while many descriptions of LCEVC include one or two downsampling steps for encoding a base video in a lower resolution, and then upsampling for the L1 and L2 layer to add resolution, it also lies within the standard use of LCEVC to encode the base layer in full resolution with no downsampling, and use the L1 and L2 LCEVC layers to add other types of enhancements, examples thereof being quality in the form of a more detailed quantization or more detailed color information.

In the present invention, an LCEVC encoder is used to encode differences to a non-downsampled base layer in a different way than what is described in prior art. The LCEVC encoder is here used to not encode quality or resolution enhancements to corresponding frames in the base layer, but instead actually encode differences between entire frames. Since an LCEVC encoded frame by its design always will be encoded with reference to a corresponding frame in the base layer, skip frames are inserted in between the base layer encoded frames and used as reference frames for the LCEVC encoded frames. It may be noted that these added skip frames can be encoded with a minimum of encoder resources, e.g., in a small software implemented encoder block in the base encoder. According to the invention, half the frames, i.e., every second frame, of an input video sequence, will not be encoded by the base encoder, and instead only be encoded in the LCEVC encoder with reference to a skip frame in the base layer, meaning that the frames in the LCEVC layer in practice thereby, since the skip frames will be copies of the previous frame, will be encoded with reference to a previous frame in the base layer. In this manner, the invention manages to increase throughput of encoded image frames without adding resources to the base encoder.

In more precise terms, the present invention relates to a method of encoding a sequence of frames in a video stream, comprising
receiving the sequence of frames at a first frame rate,
encoding every second frame in the received sequence in a first base layer employing intercoding and intracoding,
inserting skip frames between the frames encoded in the first base layer, such that every second frame in the first base layer is intercoded with a reference to copy image content of a previous encoded frame in the first base layer,
encoding remaining frames in the received sequence in a first Low Complexity Enhancement Video Coding, LCEVC, layer associated with the first base layer, employing residuals and references to corresponding skip frames in the first base layer, and
embedding the first LCEVC layer in the first base layer to obtain a first sequence of encoded frames at the first frame rate.

It should be noted that in the invention as defined in the appended claims, the term "first LCEVC layer" does not refer to an L1 LCEVC layer. Instead, the term "first" is only used to denote an LCEVC layer associated with the first base layer. In fact, since only one LCEVC layer might be used, the first LCEVC layer may actually refer to an L2 (mandatory) LCEVC layer. In case both an L1 and an L2 layer is used, then the term "first LCEVC layer" is meant to refer to the set of the L1 and the L2 layer.

The terms *corresponding frame* and *corresponding skip frame* are used herein to mean having the same temporal position, time stamp or index in a temporal sequence of frames as the frame currently being encoded. Since the sequence of frames are in an order corresponding to a capture time of the frames, the temporal position normally relates to the capture time of the frame, thus, the corresponding frame has the same capture time as the frame currently being encoded.

The term *skip frame* is used herein to describe a frame which contains no encoded differences in relation to another frame to which it references. The terms empty frame or P-skip frame are sometimes used as alternatives to the term skip frame. A skip frame is a type of inter coded frame that represents data by only references to other image data without including residual values or motion vectors. Thus, a skip frame represents image data by referring to image data of another frame without adding any difference information.

In other words, a skip frame will repeat, duplicate or copy another frame completely, without changing or adding any image or pixel information compared to the frame to which the skip frame references. The skip frame is, e.g., encoded using skip blocks for all blocks of the frame. Skip blocks are blocks which each only includes an indication that the block is a skip block. Thus, a skip block is a block for which no additional information is provided in relation to a corresponding block of a corresponding frame. Corresponding block here means a block that is located at the same spatial position or spatial coordinates within another frame as in the frame currently being encoded.

A skip frame may, if the encoding standard employed to encode the skip frame supports this option, be encoded with an indication that this entire frame contains no further image information. This indication may be in the form of a flag in the frame header indicating that the frame is a skip frame. In other words, the skip frame may have a flag indicating that no macroblocks (or CTUs, or superblocks, depending on the encoding standard) were encoded in this frame. This is the case in the AV1 encoding standard, where a skip frame is denoted "repeat-frame" and is indicated by setting a "show_existing_frame" flag to 1 in a header of the frame.

Between frames encoded in the first LCEVC layer, skip frames referencing a corresponding frame encoded in the first base layer may be inserted, such that at every second frame in the first LCEVC layer contains a reference to copy image content of a corresponding frame in the first base layer.

As an alternative to inserting skip frames in the LCEVC layer, "non-enhancement" flags may be inserted between frames encoded in the first LCEVC layer, wherein the "non-enhancement" flags indicate to a decoder that no LCEVC enhancement is available for corresponding frames in the first base layer.

Both of these options will have the effect that, when decoding the video stream in an LCEVC enabled decoder, the image data at the position of the "non-enhancement" flag or at the position of the LCEVC layer skip frame will be the image data encoded at the corresponding position in the base layer. In other words, both the option of encoding a skip frame in the LCEVC layer and the option of inserting a "non-enhancement" flag in the LCEVC layer will mean that no information will be added by the LCEVC layer at that position, and the corresponding base layer frame will be shown without any additions from the LCEVC layer.

The first LCEVC layer may be embedded in supplemental information units, such as Supplemental Enhancement Information, SEI, messages or metadata Open Bitstream Units, OBU, in the first base layer.

In this way, the LCEVC layers can be added to the base video stream without modifying the actual image data of the base video. This also means that a decoder without LCEVC capabilities will still be able to decode the base video and ignore the LCEVC layers. SEI messages are used in H.264 and H.265, and metadata OBUs are used in AV1 codecs.

In embodiments of the invention, a temporal buffer is disabled during encoding of the first LCEVC layer, such that each frame encoded in the first LCEVC layer is encoded independently of other frames in the first LCEVC layer. In this way, each frame encoded in this layer will only refer to the corresponding frame in the base layer, i.e., the skip frame at the corresponding position in the base layer. The previous frames in the LCEVC layer will not be more similar, i.e., closer in time, to the current LCEVC frame than this base layer skip frame, and, thus, temporal encoding with reference to a previous LCEVC frame will not be advantageous when LCEVC is used as in the present invention. Therefore, it is preferable to just disable the temporal buffer for the encoding of the LCEVC layer.

According to embodiments of the invention, the first LCEVC layer and the first base layer are encoded with the same scaling and quality. That the LCEVC layer and the base layer has the same scaling means that there is no up- or downsampling, i.e., no change in image resolution, between the base layer and the LCEVC layer. That the LCEVC layer and the base layer has the same quality means that there is an equal amount of details, equal color depth, equal choice of quantization levels, etc in the base layer and in the LCEVC layer. In that way the resulting decoded video stream should have no noticeable differences between those frames that are encoded in the base layer and those frames that are encoded in the LCEVC layer.

According to embodiments of the invention the first base layer is encoded by a base encoder operating at half the first frame rate and the first LCEVC layer is encoded by an LCEVC encoder operating at half the first frame rate. This means that a lower performance encoder can be used to encode the video stream, or more exactly, the base encoder and the LCEVC encoder each only need to be able to process frames at half the desired output frame rate, which is the same as the first frame rate. Thus, less costly and smaller encoders can be used, or encoders can be run in a manner that uses less processing power.

In some embodiments, the method comprises encoding the every second frame in the received sequence in a second base layer employing intercoding and intracoding,
inserting skip frames between frames encoded in the second base layer, such that every second frame in the second base layer is intercoded with a reference to copy image content of a previous encoded frame in the second base layer,
encoding the remaining frames in the received sequence as a second LCEVC layer associated with the second base layer, employing residuals and references to corresponding skip frames in the second base layer, and
embedding the second LCEVC layer in the second base layer to obtain a second video sequence of encoded frames at the first frame rate.

Here, the frames of the video sequence are encoded twice, typically using different setting or parameters for the encoding. A common use case is that the video sequence needs to be encoded according to two different encoding standards, such as H.264 and AV1. The every second frames, i.e., the frames that are encoded only by the base encoder, will then be encoded twice, both in the first base layer with first settings (e.g., a first encoding standard) and in the second base layer with second settings (e.g., a second encoding standard). The base encoder will need to be able to switch between settings for the first base layer and the second base layer between each frame encoded in the base layers. The remaining frames, i.e., the frames that are positioned between the frames that are encoded in the base layers are also encoded twice; in a first LCEVC layer and in a second LCEVC layer, both times with reference to inserted skip frames in their respective base layer.

In addition, the first base layer and the second base layer may be encoded by a base encoder operating at the first frame rate and the first LCEVC layer and the second LCEVC layer may be encoded by an LCEVC encoder operating at the first frame rate. In line with what was described above, this means that a lower performance encoder can be used to encode the video stream, or more exactly, the base encoder and the LCEVC encoder each only need to be able to process frames at the desired output frame rate, not twice the frame rate as would otherwise be the case when the video sequence is encoded twice with different settings. Thus, less costly and smaller encoders can be used, or encoders can be operated in a manner that uses less processing power.

In more detail, in embodiments of the invention, the base encoder alternates between encoding a specific received frame in the first base layer and encoding the same specific frame in the second base layer.

In some embodiments of the invention, the first base layer is encoded according to a first video encoding format and the second base layer is encoded according to a second video encoding format which is different from the first video encoding format. In this way dual streams can be provided where the same input video is output in two different video coding formats, enabling selection of a desired coding format at a receiver end.

In other embodiments, frames encoded in the first base layer and frames encoded in the first LCEVC layer are encoded with a set of overlays, and frames encoded in the second base layer and frames encoded in the second LCEVC layer are encoded without the set of overlays. In this way dual streams can be obtained where the same input video can be provided both with and without overlays, enabling selection between one stream where overlays, such as privacy masks or informative text overlays, are present, and another stream where such overlays are left out.

According to a second aspect of the invention an encoding unit is provided for encoding a sequence of frames in a video stream, comprising circuitry configured to carry out the method as described above.

According to a third aspect of the invention a computer-readable storage medium is provided comprising computer program code which, when executed by a computer, causes the computer to carry out the method as described above.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Fig 1 schematically shows a camera.
Fig 2 illustrates encoding and decoding of video according to a method of the invention.
Fig 3 shows, in terms of functional blocks, an architecture of an encoder configured for encoding according to the LCEVC standard.
Fig 4A illustrates encoding of video according to a method of the invention where dual video sequences are provided.
Fig 4B illustrates decoding of the encoded video sequences in fig 4A.
Fig 5 is a flowchart illustrating a method of the invention.

### Detailed Description

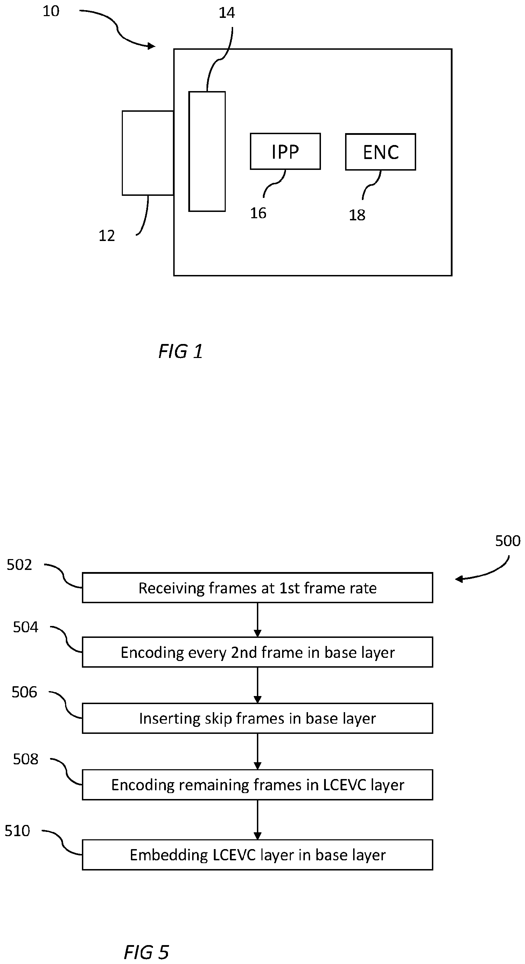

Fig 1 illustrates a camera 10 which is used for capturing video of a scene, such as for monitoring or surveillance purposes. The camera 10 is equipped with an optical unit 12 having lenses, optical filters and other standard optical parts, an image sensor 14, an image processing unit 16 and an image encoding unit 18. The camera 10 captures a video stream or sequence containing a plurality of video or image frames showing the monitored scene. Other than the elements illustrated in fig 1, the camera may also comprise other standard components such as memories, general purpose processing units, inputs and output interfaces, network interfaces etc.

It may be noted that the frame rate of video, often expressed in frames per second, fps, is commonly 60 fps or above in the image sensors used in today's monitoring cameras. In addition, the resolution of the images is not uncommonly 4K, 3840*2160 pixels, or more in modern image sensors. These two parameters, resolution and frame rate, will in turn decide the bitrate that the encoding unit 18 will need to be able to process.

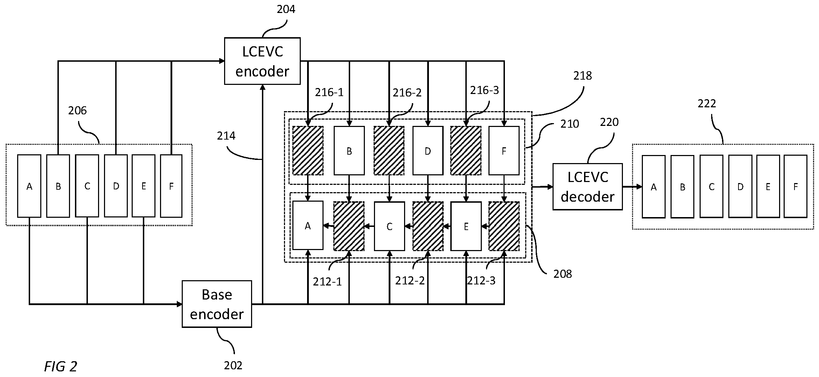

Fig 2 illustrates a method of encoding which takes place in the image encoding unit 18 of fig 1. The image encoding unit 18 is in fig 2 represented as two separate units for illustrational purposes, a base encoder 202 and an LCEVC encoder 204. Remaining parts of the camera 10 are not shown in fig 2 for sake of simplicity.

The encoding of an incoming video stream or sequence 206 of frames, also known as image frames or video frames or simply images or pictures, will now be explained with reference to fig 2. The video sequence 206 is illustrated to contain six frames, A, B, C, D, E, F. However, it is apparent to a person with knowledge in the field of video encoding that most often many more frames are contained in a video sequence encoded in a monitoring camera. The frame rate of the video sequence 206 is assumed to be 120 fps, and the resolution 4K. These numbers are obviously only meant as examples that will make the explanation herein easier to follow for a reader.

It is further assumed that the encoders 202 and 204 have an upper limit as to how fast they are able to process incoming images into encoded images. It will be assumed that the encoders each are limited to processing at a bitrate corresponding to 60 4K frames per second. Thus, in the example shown in fig 2, it is assumed that the frame rate and resolution of the video sequence 206 will cause a bitrate which is twice that of the capacity of each of the base encoder 202 and the LCEVC encoder 204. Again, these numbers are only illustrative examples, making the description more accessible to the reader. What will be illustrated in fig 2 is how the present invention makes it possible to encode image frames at a higher bitrate without expanding the capacity of encoding units.

As is shown in fig 2, the sequence 206 of images A, B, C, D, E and F is encoded in the base encoder 202 and the LCEVC encoder 204 in an alternating manner. It may be noted that since each of the encoders 202 and 204 only process one in two images of sequence 206, the encoders 202 and 204 only have to work at half the frame rate of the sequence 206. Thus, if the sequence 206 of image frames to be encoded has a frame rate of 120 fps, the encoders 202 and 204 only have to process images at 60 fps instead of 120 fps.

Thus, every second image, A, C, E, is encoded in the base encoder 202 into a sequence 208, or base layer, of encoded images. The base encoder 202 will use a standard encoding scheme such as H.264, H.265 or AV1, based on inter- and intraframe encoding, to encode the frames A, C, E. During encoding, the base encoder 202 will insert skip frames 212-1, 212-2, 212-3 between the images A, C, E. The inserted skip frames 212 will double the frame rate so that the sequence 208 output from the base encoder 202 will have the same frame rate as the input sequence 206. The skip frames 212 will not, as explained earlier in this application, add any image information to the encoded sequence 208.

The skip frames 212 may be encoded in the base encoder 202 or may be encoded in a separate encoding block connected to the base encoder 202. This encoding block, not shown in the figures, may be either in the form of a hardware block configured to encode skip frames or may be provided in the form of software run on a general purpose processor. Generally, skip frames do not require a lot of effort to encode. Since it is even possible to pre-encode such a frame, and then simply copy it when used, it may be estimated that a skip frame may be encoded, or inserted, using as little as 0,1 percent of the processing power needed for encoding a regular inter- or intracoded frame.

The remaining images, B, D, F are encoded in the LCEVC encoder 204 into a sequence 210, or LCEVC layer, of encoded images. Since the LCEVC standard calls for each image encoded in an LCEVC encoder being encoded with reference to a corresponding image in a base layer, the images B, D, F will be encoded with reference to the skip frames 212 that were inserted in the base layer at positions corresponding to the images B, D, F. A reconstructed version of the sequence 208 of encoded images from the base encoder 202 is provided to the LCEVC encoder 204 via connection 214.

The LCEVC encoder 204 will use an LCEVC encoding scheme to encode the images B, D, F as residuals found by calculating the difference between the respective image B, D, F and the reconstructed version of the corresponding skip frame 212 in the base layer, i.e., the sequence 208.

Since, as described in depth previously, the skip frames 212 only contain references to copy a preceding image in the sequence 208, the LCEVC encoder will therefore in reality encode the images B, D, F with reference to their respective preceding image A, C, E, in the sequence 206. In more detail, this means that, e.g., image B will be encoded in the form of residuals calculated by comparing image B to the reconstructed version of the encoded skip frame 212-1, which in turn merely contains references to copy image A from the sequence 208.

Thus, image B will be encoded with reference to skip frame 212-1 (which is a copy of image A), in the form of the residuals found when comparing image B to skip frame 212-1 (i.e., in reality image A); in an analogue manner image D will be encoded with reference to the skip frame 212-2 (which is a copy of image C) as the residuals found when comparing image D to skip frame 212-2 (i.e., in reality to image C); and image F will be encoded with reference to skip frame 212-3 (which is a copy of image E) as the residuals found when comparing image F to skip frame 212-3 (i.e., in reality image E).

Between the images B, D, F, the LCEVC encoder 204 will either insert skip frames 216-1, 216-2, 216-3, or, as an alternative, add non-enhancement flags 216-1, 216-2, 216-3 in the encoded sequence 210, i.e., the LCEVC layer. The skip frames 216 will be encoded with reference to the corresponding frames in the base layer, i.e., sequence 208, such that the skip frame 216-1 will reference image A, skip frame 216-2 will reference image C and skip frame 216-3 will reference image E.

The encoded image sequence 208, i.e., the base layer, and the encoded image sequence 210, i.e., the LCEVC layer, together form the encoded image sequence 218, containing an encoded version of the input image sequence 206. In accordance with the LCEVC standard, the sequence 210 will be included in the sequence 208 in a form suited to the encoding format of the sequence 208. For example, if the base layer, i.e., the sequence 208, is encoded according to the H.264 video encoding standard, each image in the LCEVC layer, i.e., the sequence 210, will be included in an SEI message in a header of a corresponding image in the base layer, i.e., the sequence 208. As another example, in case the base layer, i.e., the sequence 208, is encoded according to the AV1 video encoding standard, each image in the LCEVC layer, i.e., the sequence 210, will be included in metadata open bitstream units, OBUs, with a corresponding image in the base layer, i.e., the sequence 208.

Generally speaking, the LCEVC layer images will be packaged together with the images encoded by the base encoder in a manner that is adapted to the encoding scheme used by the base encoder. Thus, as mentioned, the LCEVC layer images may be included in the base layer images in the form of SEI messages of the Network Abstraction Layer, NAL. Other options are as frame metadata in a WebM container or in an additional data Packet Identifier, PID, in a MPEG-2 TS stream.

Returning to the example currently discussed, the encoded version of image A will contain, in the form of an SEI message, either the skip frame 216-1 or a non-enhancement flag 216-1. The next image in sequence 208, i.e., the skip frame 212-1 will contain, in the form of an SEI message, the LCEVC encoded version of image B, i.e., the residuals that were determined by comparing to image B to the reconstructed version of skip frame 212-1 (in reality image A), and so on and so forth for the rest of the images in the encoded image sequence 218.

It may be noted that there are no temporal references, or temporal prediction, between the images encoded within the LCEVC layer. Such temporal prediction is possible (but optional) to use within the L2 layer according to the LCEVC standard, but according to the method described herein, such temporal prediction will not be used within the LCEVC layer, i.e. temporal buffers will not be used in the encoding of the L2 layer. As can be understood, there will be no gains from using such temporal prediction within the LCEVC layer in the present invention, since the previous image in the LCEVC layer will not be more similar to the currently encoded image than the image referenced in the base layer.

Also illustrated in fig 2 is an LCEVC decoder 220. When this decoder receives the image sequence 218, it will decode the sequence 218 into a decoded image sequence 222, corresponding to the original image sequence 206 and containing a decoded version of the image sequence 218. The sequence 222 will have the same frame rate and resolution as the originally input image sequence 206.

In the example discussed above where the base encoder 202 is encoding the base layer using the H.264 format, the decoder 220 will retrieve the image data that is stored in SEI messages in the skip frames 212 in the base layer and reconstruct the images B, D, F in addition to the images A, C, E. The decoder will also access the SEI messages stored in the headers of the encoded images A, C, E in the sequence 218. However, those SEI messages will either contain a skip frame 216 or a non-enhancement flag 216 and will therefore not add any data to or change the images A, C, E.

To even better understand the present invention, it is useful to compare to the situation where an image sequence is encoded by a base encoder and an LCEVC encoder according to a standard use of the LCEVC encoding, e.g., as is described in S. Battista et al., "Overview of the Low Complexity Enhancement Video Coding (LCEVC) Standard," in IEEE Transactions on Circuits and Systems for Video Technology, vol. 32, no. 11, pp. 7983-7995, Nov. 2022, doi: 10.1109/TCSVT.2022.3182793 which was also cited earlier in this application.

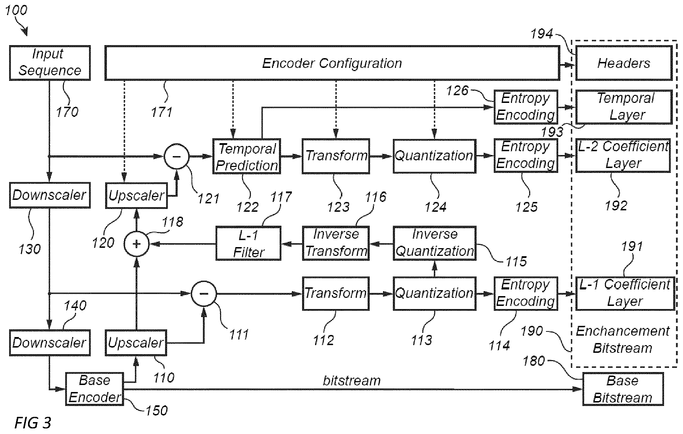

A summary overview of encoding according to the LCEVC standard will therefore be given with reference to fig 3. Note that reference numerals in fig 3, as well as some terms for denoting the different elements of the encoders, may be different from those used in the remaining figures, in order to underline the fact that fig 3 illustrates a standard encoder and also to facilitate reference to other LCEVC related documentation such as the research paper referenced above.

Fig 3 shows, in block diagram form, an encoder 100 which is configured to process a video input sequence 170 into a hybrid video stream comprising a base bitstream 180 and an enhancement bitstream 190.

The hybrid video stream may be used to facilitate digital transmission of the input sequence 170 to a recipient or for storage thereof. The base bitstream 180 is a coded representation, which is provided by an arbitrary base encoder 150, of a twice downsampled version of the input sequence 170, which is the output from downscalers 130, 140. The base encoder 150, which, as mentioned previously, is not specified in LCEVC, may be configured for Advanced Video Coding (AVC), High-Efficiency Video Coding (HEVC), Essential Video Coding (EVC), Versatile Video Coding (VVC), AOMedia Video 1 (AV1) or the like.

The enhancement bitstream 190 contains a L1 (LCEVC layer 1) coefficient layer 191 on the one hand, and a L2 (LCEVC layer 2) coefficient layer 192 and an associated temporal layer 193 on the other hand. Additionally, the enhancement bitstream 190 may contain headers 194, from which a recipient of the hybrid bitstream may - in the interest of correct decoding - obtain information about the encoder configuration 171 that was in force when the hybrid bitstream was prepared.

The encoder configuration 171 may affect any of the components of the encoder 100. In the standardized encoder 100, L1 is optional and L2 is mandatory. The serial upscalers 110, 120 upsample a reconstructed version of the base bitstream 180. The reconstructed version of the base bitstream 180 may be obtained by decoding the output of the base encoder 150. Alternatively, if the base encoder 150 is configured for interframe predictive coding, at least parts of the reconstructed version may be taken from a reference buffer of the base encoder 150. The upscalers 110, 120 are active regardless of whether L1 is active.

When L1 is active, a subtractor 111, a transform block 112, a quantization block 113 and an entropy coding block 114 operate to provide the L1 coefficient layer 191. The subtractor 111 computes a difference between the input video which has the intermediate spatial resolution (after downsampling) and a reconstructed video which has the intermediate spatial resolution (after upsampling).

Further, an inverse quantization 115 block, an inverse transform block 116, an L1 filter (e.g., deblocking filter) 117 and an adder 118 are active to prepare the processing in sublayer 2, namely by mimicking the action of the first enhancement layer at the decoding side. The total action of these blocks 115, 116, 117, 118 is to add a reconstruction of the first residuals to the reconstructed video at the intermediate spatial resolution.

Within L2, a subtractor 121, a transform block 123, a quantization block 124 and an entropy coding block 125 operate to provide the L2 coefficient layer 192. The subtractor 121 computes a difference between the input video at the original spatial resolution and a reconstructed video at the original spatial resolution, which is obtained by adding a reconstruction of the first residuals to the reconstructed video at the intermediate spatial resolution and upsampling the sum to the original spatial resolution. The quantization block 124 may apply an equal level of quantization as the quantization block 113, or a different level of quantization.

Still within L2, there is provided a temporal prediction block 122, which outputs data to the transform block 123 and outputs temporal signaling to an entropy coding block 126. The entropy coding block 126 is configured for entropy-encoding said temporal signaling as the temporal layer 193. Alternatively, the entropy coding blocks 125, 126 can be implemented as a single block (not shown). The single block may perform two parallel entropy-coding processes - one on the output of the quantization block 124 and one on the temporal signaling - or a single entropy-coding process, which operates on a multiplexed stream of the output of the quantization block 124 and the temporal signaling. Within L1, there is no temporal prediction and each video frame of the first enhancement stream is decodable without reference to any other video frame of the first enhancement stream.

The respective downsampling actions of the first and second downscalers 130, 140 can be chosen independently. In conventional implementations of LCEVC, the action of the first downscaler 130 is inverse to that of the second upscaler 120, and the action of the second downscaler 140 is inverse to that of the first upscaler 110.

In LCEVC implementations, the transform blocks 112, 123 operate on blocks of 2×2 pixels or 4×4 pixels at the respective spatial resolution. An example transform kernel *DT* suitable for being applied by the transform blocks 112, 123 is given by equation 8 and figure 8 in S. Battista et al., "Overview of the Low Complexity Enhancement Video Coding (LCEVC) Standard", IEEE Transactions on Circuits and Systems for Video Technology, vol. 32, no. 11, pp. 7983-7995 (DOI: 10.1109/TCSVT.2022.3182793), 2022.

The temporal prediction block 122 is configured to decide whether to use temporal prediction on a transform block basis, i.e., 2×2 pixels or 4×4 pixels at the respective spatial resolution. Additionally, an entire block (tile) of 32×32 residuals can be signaled to be encoded without temporal prediction, so that the temporal signaling's 193 contribution to the total signaling overhead for a fast-moving subsequence of video frames can be marginally reduced.

Returning to the illustrative comparison between the inventive encoding scheme described above with reference to fig 2 and the encoding without modifications according to the LCEVC standard as illustrated in fig 3, it is assumed (in the same way as for the base encoder 202) that the base encoder 150 is limited to processing images at a bitrate corresponding to 4K pixel images at 60 fps. Thus, in order to process an input image sequence with 4K resolution, i.e., 3840*2160 pixels images at 120 fps, the images will be downscaled to half that resolution, i.e., (3840/√2)*(2160/√2), to allow the base encoder 150 to process the images at the needed frame rate of 120 fps. It may be noted that the bitrate of images having half the resolution of 4K images at 120 fps is equivalent to the bitrate of 4K images at 60 fps.

A situation where only one LCEVC layer (L2) is used will now be described. In that situation residuals will be calculated in the L2 layer between the input 4K 120 fps images and upscaled, reconstructed versions of the images that were encoded in half that resolution in the base encoder. In this way the L2 layer will add back the resolution that was removed when downscaling the images to the base encoder. It should be noted that images will need to be processed at a bitrate corresponding to 4K 120 fps to calculate the residuals for the L2 layer.

When comparing to the situation described above with reference to fig 2, it can be seen that the base encoder 202 when encoding according to fig 2 and the base encoder 150 when encoding according to standard LCEVC encoding need the same capacity, i.e., they need to be able to process 4K images at 60 fps, or, equivalently, half that resolution at 120 fps. The difference lies in the capacity required to encode the LCEVC layer, where a higher capacity for encoding the LCEVC layer is needed in the standard LCEVC encoding scheme shown in fig 3 than in the inventive encoding scheme illustrated in fig 2.

More in detail, the inventive encoding scheme will in the described example require a capacity of 4K 60 fps, and the standard way of using LCEVC encoding will instead require a capacity of 4K 120 fps, i.e., twice that of the invention. Thus, in total, encoding an image sequence according to standard LCEVC format will require 50% of 4K 120fps for the base layer and 100% of 4K 120fps in the LCEVC layer, i.e., in total 150% of the bitrate of encoding a 4K 120 fps image sequence. When using the inventive approach, both the base layer and the LCEVC layer will require a bitrate of 4K 60 fps, i.e., 50% of 4K 120 fps per layer, in total 100% of 4K 120 fps.

While it is true that the encoding of the LCEVC layer requires far less resources, in terms of hardware and chip area, than encoding of the base layer in a base encoder adapted for H.264 encoding or another base encoding scheme which can be combined with LCEVC, it is still very useful to be able reduce the encoding effort needed in the LCEVC encoder.

As the keen observer may be tempted to point out, in the inventive encoding scheme described in reference to fig 2, skip frames are also added to the base layer, i.e., sequence 208, by the base encoder 202, or by a skip frame encoder unit connected to the base encoder, and skip frames or non-enhancement flags may also be added to the LCEVC layer, i.e., sequence 210. However, as briefly discussed above, skip frames are inexpensive to encode, and the addition of these skip frames in the fig 2 encoding situation will add less to the total amount of encoding resources needed than will the doubled bitrate needed in the LCEVC encoder in the standard LCEVC encoding situation with one (L2) LCEVC layer.

It may also be instructive to compare the encoding scheme described in reference to fig 2 to a standard LCEVC encoding with two LCEVC layers, L1 and L2, as illustrated in fig 3. In that case the images, as in the previously described scenario where only one LCEVC layer, L2, was used, are downscaled twice for the base encoder, and then the downscaled images are upscaled twice, once for the L1 layer and another time for the L2 layer.

Again, it is assumed that a 4K 120 fps image sequence 170 is input, and that the base encoder 150 is capable of encoding images at a bitrate corresponding to 4K 60fps, i.e., at half the bitrate that is needed to encode images at 4K 120 fps. The input images are downscaled in two stages in downscalers 130 and 140 from 4K 120 fps to half that resolution at 120 fps and encoded by the base encoder into a base layer at a bitrate corresponding to 50% of the bitrate corresponding to 4K 120fps, i.e. at a bitrate corresponding to 4K 60 fps. For simplicity, it may be assumed that the first downscaler will reduce the resolution along a first dimension and the second downscaler will reduce the resolution along a second dimension.

The encoded images in the base layer are then upscaled and reconstructed in two steps to reach the original resolution of 4K. The residuals between the upscaled reconstructed images and the input image sequence are, as described above, encoded in two stages in an L1 and an L2 LCEVC layer. To generate the first LCEVC layer, L1, once downscaled 4K 120 fps images are encoded at a bitrate corresponding to (1/√2) *100% of the bitrate required to encode 4K 120 fps images, and to generate the second LCEVC layer, L2, 100% of the bitrate of encoding 4K 120 fps images is required. Thus, in this situation, to encode the two LCEVC layers will require a bitrate of 50% + 100%/√2 + 100% = 220% of the bitrate needed when encoding the same image sequence according to the inventive method.

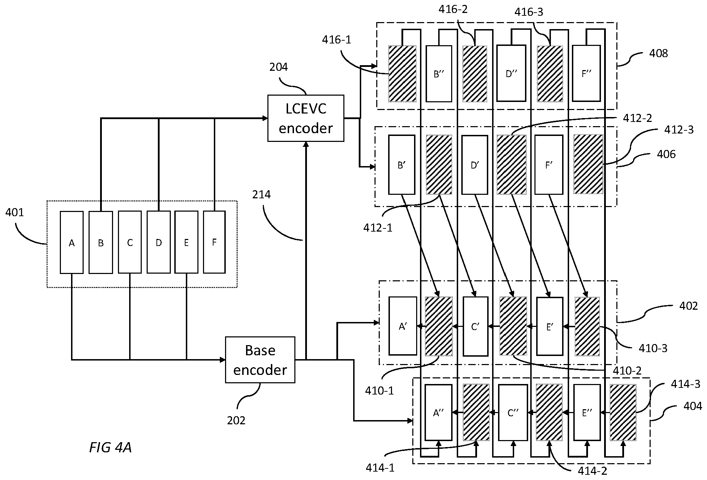

The inventive encoding scheme presented herein will also be useful in the scenario presented in fig 4A, where the input image sequence A, B, C, D, E, F is encoded into two different image sequences A', B', C', D', E', F' and A", B", C", D", E", F". The need to encode the same image sequence in two different manners may, e.g., arise in a situation where it is desired to provide the same sequence encoded using two different base encoding schemes, such as H.264 and AV1. Another relevant example is when there is a need to provide the same image sequence encoded in one version with some type of overlaid graphics, such as masks or text overlays and one version not including those same overlays.

In fig 4A it is assumed that the base encoder 202 is limited to a bitrate corresponding to 4K 60 fps, and that the incoming image sequence 401 is in 4K 60 fps. It is in the example illustrated in fig 4A desired to provide two versions of the image sequence 401, but the base encoder will not be able to encode images at a bitrate of twice the bitrate corresponding to 4K 60 fps. Therefore, the inventive method may be used, such that only every other image in the incoming sequence 401 will be encoded in the base encoder 202, and the rest of the images will instead be encoded in the LCEVC encoder 204. In this way, the base encoder 202 will be able to encode two version of the images A, C, E, and the LCEVC encoder 204 will be able to encode two versions of the images B, D, F

As illustrated in fig 4A, an image sequence 401 is encoded in the base encoder 202 and the LCEVC encoder 204 in an alternating manner, so that every second image is encoded in the base encoder 202 and every other second image, i.e., the remaining images that are not encoded in the base encoder 202, are encoded in the LCEVC encoder 204. In addition, every image in the image sequence 401 is in fig 4A encoded in two different versions by the base encoder 202 and the LCEVC encoder 204. The images A, C, E are encoded in a first version A', C', E' in a first base layer image sequence 402, and in a second version A", C", E" in a second base layer image sequence 404. The images B, D, F are encoded in a first version B', D', F' in a first LCEVC layer image sequence 406, and in a second version B", D", F" in a second LCEVC layer image sequence 408.

The images B', D', F' in the first LCEVC layer image sequence 406 are encoded with reference to skip frames 410-1, 410-2, 410-3 that are inserted by the base encoder 202 in the first base layer image sequence 402 between images A', C', E' in the same way as skip frames 212 were inserted in the base layer image sequence 208 in fig 2. In addition, skip frames 412-1, 412-2, 412-3 or non-enhancement flags 412-1, 412-2, 412-3 are inserted between the images B', D', F' in the same manner as skip frames 216 or non-enhancement flags 216 were inserted in the LCEVC layer image sequence 210 in fig 2.

The images B", D", F" are encoded with reference to skip frames 414-1, 414-2, 414-3 that are inserted by the base encoder 202 in the second base layer image sequence 404 between images A", C", E", also in the same way as skip frames 212 were inserted in the base layer image sequence 208 in fig 2. In addition, skip frames 416-1, 416-2, 416-3 or non-enhancement flags 416-1, 416-2, 416-3 are inserted between the images B", D", F" in the same manner as skip frames 216 or non-enhancement flags 216 were inserted in the LCEVC layer image sequence 210 in fig 2. Similar to what was described in reference to fig 2, the first LCEVC layer 406 will here as well be included in the first base layer 402, and the second LCEVC layer 408 will be included in the second base layer 404, e.g., in the form of SEI messages in case the base encoder 202 works according to a H.264 encoding scheme.

The reader is here reminded that in this text the term "first LCEVC layer 406", and "second LCEVC layer 408" does not refer to sublayers L1 and L2. Each of the first LCEVC layer 406 and the second LCEVC layer 408 may as explained earlier in this text include one (L2) or two (L1 and L2) LCEVC sublayers. Commonly, only the mandatory L2 sublayer will be used, but it is not ruled out that both the mandatory L2 sublayer and the optional L1 sublayer is used within each of the first LCEVC layer 406 and the second LCEVC layer 408.

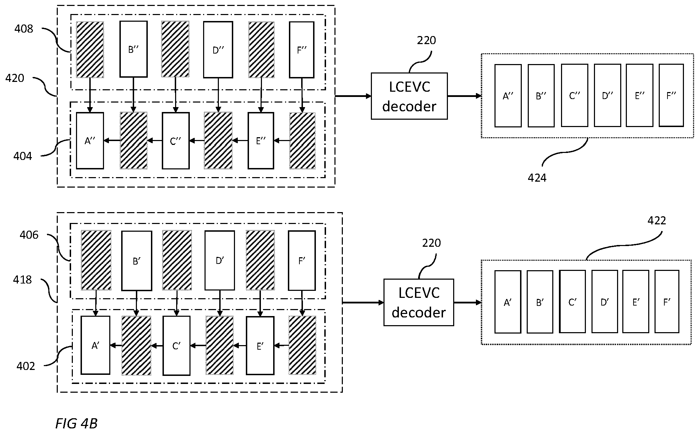

Turning now to fig 4B, it is shown how the first base layer image sequence 402 and the first LCEVC layer image sequence 406 together form a first encoded image sequence 418, being an encoded first version A', B', C', D', E', F' of the image sequence 401 of images A, B, C, D, E, F. The second base layer image sequence 404 and the second LCEVC layer image sequence 408 together form a second encoded image sequence 420, being an encoded second version A", B", C", D", E", F" of the image sequence 401 of images A, B, C, D, E, F.

As illustrated in the figure, when the first encoded image sequence 418 is decoded in the LCEVC decoder 220, a first decoded image sequence 422 comprising a first version A', B', C', D', E', F' of the image sequence 401 will be generated, and when the second encoded image sequence 420 is decoded in the LCEVC decoder 220, a second decoded image sequence 424 comprising a second version A", B", C", D", E", F" of the image sequence 401 will be generated.

In case the difference between the two encoded versions of the image sequence 401 merely was the type of encoding, it may be assumed that after the decoding, there will be no discernible differences between the two image sequences 422 and 424. On the other hand, if the difference between the two versions is that one was encoded with overlaid graphic elements, such as text or masked areas, and the other did not contain those overlaid graphic elements, the two different decoded versions 422 and 424 of the image sequence 401 will indeed be different in the same way.

Fig 5 is a flow chart illustrating the encoding method 500 which was described with reference to fig 2. In step 502, the sequence 206 of frames A, B, C, D, E, E is received at the first frame rate.

In step 504 every second frame A, C, E in the received sequence of frames is encoded in the base layer 208 by the base encoder 202.

In step 506 skip frames 212 are inserted by the base encoder 202 between the frames encoded in the base layer, such that every second frame in the base layer is intercoded with a reference to copy image content of a previous encoded frame in the base layer.

It may be noted that steps 504 and 506 may be performed in one step or together, not necessarily as one step taking place after the other. I.e., the skip frames may be generated and inserted in the base layer continuously during the encoding of the base layer.

In step 508 the remaining frames B, D, F of the sequence 206 of frames are encoded in the LCEVC layer 210 associated with the base layer 208, employing residuals and references to corresponding skip frames in the first base layer. This step normally will take place slightly delayed in time compared to step 504 and 506 since the LCEVC encoder 204 will use a reconstructed version of the encoded base layer in order to generate the LCEVC layer

In step 510 the LCEVC layer 210 is embedded in the base layer to obtain a sequence 218 of encoded frames at the first frame rate.

The different embodiments of the encoding methods and functionality described herein may be implemented as instructions stored by one or more non-transitory computer-readable media executable by one or more processors. Generally, the device implementing the encoding unit 18 comprising the encoders 202 and 204 may comprise circuitry which is configured to implement the components of the encoding unit 18 and, more specifically, its functionality. The described features in the encoding schemes described herein can be implemented advantageously in one or more computer programs that are executable on a programmable system including at least one programmable processor. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of encoding a sequence of frames in a video stream, comprising
receiving (502) the sequence (206;401) of frames (A, B, C, D, E, F) at a first frame rate,
encoding (504) every second frame (A, C, E) in the received sequence in a first base layer (208; 402) employing intercoding and intracoding,
inserting (506) skip frames (212; 410) between the frames encoded in the first base layer, such that every second frame in the first base layer is intercoded with a reference to copy image content of a previous encoded frame in the first base layer,
encoding (508) remaining frames (B, D, F) in the received sequence in a first Low Complexity Enhancement Video Coding, LCEVC, layer (210; 406) associated with the first base layer, employing residuals and references to corresponding skip frames in the first base layer, and
embedding (510) the first LCEVC layer in the first base layer to obtain a first sequence (218; 418) of encoded frames at the first frame rate.

2. The method of claim 1, further comprising inserting, between frames encoded in the first LCEVC layer, skip frames (216; 416) referencing a corresponding frame encoded in the first base layer, such that at every second frame in the first LCEVC layer contains a reference to copy image content of a corresponding frame in the first base layer.

3. The method of claim 1, further comprising inserting "non-enhancement" flags (216; 416) between frames encoded in the first LCEVC layer, wherein the "non-enhancement" flags indicate to a decoder that no LCEVC enhancement is available for corresponding frames in the first base layer.

4. The method of any of the preceding claims, wherein the first LCEVC layer is embedded in supplemental information units in the first base layer.

5. The method of claim 4, wherein the first LCEVC layer is embedded in Supplemental Enhancement Information, SEI, messages or in metadata Open Bitstream Units, OBU, in the first base layer.

6. The method of any of the preceding claims, wherein a temporal buffer is disabled during encoding of the first LCEVC layer, such that each frame encoded in the first LCEVC layer is encoded independently of other frames in the first LCEVC layer.

7. The method of any of the preceding claims, wherein the first LCEVC layer and the first base layer are encoded with the same scaling and quality.

8. The method of any of the preceding claims, wherein the first base layer is encoded by a base encoder operating at half the first frame rate and the first LCEVC layer is encoded by an LCEVC encoder operating at half the first frame rate.

9. The method of any of claims 1-7, further comprising
encoding the every second frame in the received sequence in a second base layer (404) employing intercoding and intracoding,
inserting skip frames (414) between frames encoded in the second base layer, such that every second frame in the second base layer is intercoded with a reference to copy image content of a previous encoded frame in the second base layer,
encoding the remaining frames in the received sequence as a second LCEVC layer (408) associated with the second base layer, employing residuals and references to corresponding skip frames in the second base layer, and
embedding the second LCEVC layer in the second base layer to obtain a second video sequence of encoded frames at the first frame rate.

10. The method of claims 9, wherein the first base layer and the second base layer are encoded by a base encoder (202) operating at the first frame rate and the first LCEVC layer and the second LCEVC layer are encoded by an LCEVC encoder (204) operating at the first frame rate.

11. The method of claim 10, wherein the base encoder alternates between encoding a specific received frame in the first base layer and encoding the same specific frame in the second base layer.

12. The method of any of claims 9-11, wherein the first base layer is encoded according to a first video encoding format and the second base layer is encoded according to a second video encoding format which is different from the first video encoding format.

13. The method of any of claims 9-12, wherein frames encoded in the first base layer and frames encoded in the first LCEVC layer are encoded with a set of overlays, and wherein frames encoded in the second base layer and frames encoded in the second LCEVC layer are encoded without the set of overlays.

14. An encoding unit (18) for encoding a sequence of frames in a video stream, comprising circuitry configured to carry out the method of any one of claims 1-13.

15. A computer-readable storage medium comprising computer program code which, when executed by a computer, causes the computer to carry out the method of any one of claims 1-13.

## Amended claims

### Amended claims in accordance with Rule 137(2) EPC.

1. A method of encoding a sequence of frames in a video stream, comprising
receiving (502) the sequence (206;401) of frames (A, B, C, D, E, F) at a first frame rate,
encoding (504), at half the first frame rate, every second frame (A, C, E) in the received sequence in a first base layer (208; 402) employing intercoding and intracoding,
inserting (506) a skip frame (212; 410), between the every second frames (A, C, E) in the received sequence (206; 401) encoded in the first base layer, which skip frame (212; 410) is intercoded with a reference to copy image content of the previous every second frame (A, C, E) in the received sequence encoded in the first base layer (208; 402), whereby the frame rate of the first base layer (208; 402) is doubled, from half the first frame rate, to the first frame rate,
encoding (508) remaining frames (B, D, F) in the received sequence in a first Low Complexity Enhancement Video Coding, LCEVC, layer (210; 406) associated with the first base layer, by
calculating residuals as a difference between the respective remaining frame (B, D, F) and a reconstructed version of the respective corresponding inserted skip frame (212; 410) having a same time stamp in the first base layer (208; 402) as the respective remaining frame (B, D, F), and
embedding (510) the calculated residuals of the remaining frames (B, D, F) in supplemental information units of the respective corresponding inserted skip frames (212; 410) of the first base layer (208; 402)
wherein the first base layer (208; 402) and the first LCEVC layer (210; 406) together form a first encoded image sequence (218; 418) containing an encoded first version of the received image sequence (206; 401) of frames at the first frame rate.

2. The method of claim 1, further comprising inserting, between the remaining frames (B, D, F) encoded in the first LCEVC layer (210; 406), a skip frame (216; 412) containing a reference to copy image content of a corresponding every second frame (A, C, E) having a same time stamp in the first base layer (208; 402) .

3. The method of claim 1, further comprising inserting "non-enhancement" flags (216; 412) between the remaining frames (B, D, F) encoded in the first LCEVC layer (210; 406), wherein the "non-enhancement" flags (216; 412) indicate to a decoder that no LCEVC enhancement is available for corresponding every second frames (A, C, E) in the first base layer (208; 402).

4. The method of claim 1, wherein the first LCEVC layer (210; 406) is embedded in Supplemental Enhancement Information, SEI, messages or in metadata Open Bitstream Units, OBU, in the first base layer (208; 402).

5. The method of any of the preceding claims, wherein a temporal buffer is disabled during encoding of the first LCEVC layer (210; 406), such that each frame encoded in the first LCEVC layer (210; 406) is encoded independently of other frames in the first LCEVC layer (210; 406).

6. The method of any of the preceding claims, wherein the first LCEVC layer (210; 406) and the first base layer (208; 402) are encoded with a same scaling and quality.

7. The method of any of the preceding claims, wherein the first base layer (208; 402) is encoded by a base encoder (202) operating at half the first frame rate and the first LCEVC layer (210; 406) is encoded by an LCEVC encoder (204) operating at half the first frame rate.

8. The method of any of claims 1-6, further comprising
encoding, at half the first frame rate, the every second frame (A, C, E) in the received sequence (401) in a second base layer (404) employing intercoding and intracoding,
inserting a skip frame (414) between the every second frames (A, C, E) in the received sequence (401) encoded in the second base layer (404), which skip frame (414) is intercoded with a reference to copy image content of the previous every second frame (A, C, E) in the received sequence (401) encoded in the second base layer (404), , whereby the frame rate of the second base layer (404) is doubled, from half the first frame rate, to the first frame rate,
encoding the remaining frames (B, D, F) in the received sequence (401) as a second LCEVC layer (408) associated with the second base layer (404), by
calculating residuals as a difference between the respective remaining frame (B, D, F) and a reconstructed version of the respective corresponding inserted skip frame (414) having a same time stamp in the second base layer (404) as the respective remaining frame (B, D, F), and
embedding the calculated residuals of the remaining frames (B, D, F) in supplemental information units of the respective corresponding inserted skip frames (414) of the second base layer (404),
wherein the second base layer (404) and the second enhancement layer (408) together form a second encoded image sequence (420) containing an encoded second version of the received image sequence (401) of frames at the first frame rate.

9. The method of claims 8, wherein the first base layer (402) and the second base layer (404) are encoded by a base encoder (202) operating at the first frame rate and the first LCEVC layer (406) and the second LCEVC layer (408) are encoded by an LCEVC encoder (204) operating at the first frame rate.

10. The method of claim 9, wherein the base encoder (202) alternates between encoding a specific received frame in the first base layer (402) and encoding the same specific frame in the second base layer (404).

11. The method of any of claims 8-10, wherein the first base layer (402) is encoded according to a first video encoding format and the second base layer (404) is encoded according to a second video encoding format which is different from the first video encoding format.

12. The method of any of claims 8-11, wherein the every second frames (A, C, E) encoded in the first base layer (402) and the remaining frames (B, D, F) encoded in the first LCEVC layer (406) are encoded with a set of overlaid graphics, and wherein the every second frames (A, C, E) encoded in the second base layer (404) and the remaining frames (B, D, F) encoded in the second LCEVC layer (408) are encoded without the set of overlaid graphics.

13. The method of any of the preceding claims, where the first and/or second LCEVC layers are in accordance with standard for Low Complexity Enhancement Video Coding ISO/IEC 23094-2.

14. An encoding unit (18) for encoding a sequence of frames in a video stream, comprising circuitry configured to carry out the method of any one of claims 1-13.

15. A computer-readable storage medium comprising computer program code which, when executed by a computer, causes the computer to carry out the method of any one of claims 1-13.
